# EUROPEAN PATENT SPECIFICATION

(11) **EP 3 127 726 B1**
(45) Date of publication and mention of the grant of the patent: **20.11.2019**
(21) Application number: 15179446.8
(22) Date of filing: 01.08.2015
(51) Int. Cl.: B60G 11/27, B60G 11/28, B60G 21/055, B60G 5/00, B60G 9/02

(54) **PNEUMATIC TANDEM AXLE SUSPENSION FOR A PAIR OF REAR AXLES OF A VEHICLE, IN PARTICULAR A HEAVY GOODS VEHICLE**
PNEUMATISCHE TANDEMACHSAUFHÄNGUNG FÜR EIN HINTERACHSPAAR EINES FAHRZEUGS, INSBESONDERE FÜR EINEN LASTKRAFTWAGEN
SUSPENSION D'ESSIEU À TANDEM PNEUMATIQUE POUR UNE PAIRE D'ESSIEUX ARRIÈRE D'UN VÉHICULE, EN PARTICULIER UN VÉHICULE UTILITAIRE LOURD

(43) Date of publication of application: 08.02.2017
(73) Proprietor: IVECO MAGIRUS AG, 89079 Ulm (DE)
(72) Inventor: KONRAD, Christian, 89269 VOHRINGEN (DE)
(74) Representative: Franzolin, Luigi

(56) References cited:
- EP-A2- 1 110 848
- WO-A1-2012/060745

## Description

The present invention concerns a pneumatic tandem axle suspension for a pair of rear axles of a vehicle, in particular a heavy goods vehicle, according to the preamble of claim 1.

Axle suspension systems for vehicles already exist in many different embodiments. Suspensions for heavy goods vehicles often comprise a combination of pneumatic and other mechanical suspension means for providing sufficient driving comfort. These suspension and dampening means are installed underneath a frame forming the chassis of the vehicle, under which the suspended axle is arranged in a traverse direction, i. e. perpendicular to the front-rear direction or driving direction of the vehicle. The suspension means combine the functions of shock absorption with a guidance function for guiding the axle movements in a predetermined manner.

A pneumatic tandem axle suspension, to which the present invention refers, suspends a pair of axles, namely a front axle and a rear axle, that are arranged behind each other at the rear portion of the vehicle. It is noted that the terms "front" and "rear" shall refer to the driving direction of the vehicle here in the following description. For each axle of this pair one suspension portion is provided, each front and rear suspension portion being part of the pneumatic tandem axle suspension. The construction of the two suspension portions is generally the same, such that the resulting tandem axle suspension is generally symmetric with respect to a vertical plane perpendicular to the driving direction. In more detail, each of the front and rear suspension portions comprises a pair of spring beams for supporting the respective axle, each of the spring beams being arranged beneath the frame and extending perpendicular to the axle. Moreover, two pairs of air bellows are arranged between the spring beams and the frame, wherein each one pair of air bellows is arranged at one side (i. e. the left or right side) of the vehicle frame and comprises a front bellow and a rear bellow arranged in front of and behind the axle, respectively, to support the respective front or rear end of the spring beams at this side of the vehicle against the bottom of the frame. Each one shock absorber is arranged to support one of the spring beams with respect to the frame. A triangular rod is pivotable linked to an upper center portion of the axle and the frame, respectively.

The pneumatic tandem axle suspension further comprises a pair of front hangers extending downward from the frame at a position between the front axle and the rear axle, to connect the respective front and rear suspension portions. Each of these suspension portions comprises a pair of longitudinal rods extending between the front hangers and the spring beams at the respective left and right sides of the vehicle. The longitudinal rods are hinged with their ends to the hanger and the spring beam, respectively.

Additional stabilizer bars are arranged underneath the frame for guiding the axles, with one stabilizer bar arranged within each of the front and rear suspension portions. The stabilizer bars are generally U-shaped and comprise a traverse beam extending parallel to the axle and two legs extending from the ends of the traverse beam in a direction perpendicular to the axis. The stabilizer bars are received within pivot bearings so that they can perform a turning movement around the main axis of the traverse beam, wherein the legs perform a swiveling up and down movement.

In a construction known as the state of the art, the respective pivot bearings supporting the stabilizer traverse beams are disposed at the front and rear sides of the pneumatic tandem axle suspension, on the height of the spring beams. In this position the respective suspensions of the stabilizer bars do not obstruct any other mounting components of the front and rear suspension portions in the space underneath the frame. However, there is a major disadvantage that this construction takes much space and restricts the ground clearance of the vehicle in front of and behind the tandem axle suspension. Another disadvantage of this arrangement is that the stabilizer bars introduce high forces and torques into the spring beams to which they are mounted. Consequently, the spring beams must have a solid construction and consequently a high weight.

It is a common demand in vehicle constructions to reduce the overall weight of the vehicle, and so that there is a demand to reduce the weight of the axle suspensions and also their costs. Another common requirement is a compact design of all components, which is still to be improved in the pneumatic tandem axle suspensions of the kind as discussed above. The driving comfort should be further improved, in particular the transfer of vibrations from the axle to the driver's cabin should be decreased. At the same time, a harmonic tracking on the road surface profile is desired.

Examples of known suspensions are disclosed in WO2012/060745 A1 or EP1110848 A2.

Therefore the problem underlying the present invention is to improve the design of the pneumatic tandem axle suspension as described above according to the state of the art, under the aspects of a more compact design, increase of ground clearance, weight reduction, cost reduction and improvement of driving comfort.

These objects are achieved by a pneumatic tandem axle suspension comprising the features of claim 1.

According to the present invention, the respective U-shaped stabilizer bars are disposed above the axle, with the two legs extending from the ends of their traverse beams in directions perpendicular to the axle. The pivot bearings for supporting the traverse beams are mounted between the bottom of the frame and one of the air bellows, respectively. The ends of the legs are pivotable linked to the axle suspended by the respective suspension portion via generally perpendicular thrust rods and axle brackets mounted on top of the axle, with each thrust rod being pivotable hinged to one leg end and to one axle bracket, respectively.

With the respective stabilizer bars being arranged in the space above the axles directly under the frame or enclosed by the frame work of the frame, the design of the pneumatic tandem axle suspension according to the present invention is very compact. Moreover, the forces acting on the stabilizer bars can be better absorbed by the frame and the axles. For this reason the spring beams can have a lighter weight, leading to a cost reduction. It has turned out that this design further increases the driving comfort by a decreased transfer of vibrations from the axle to other parts of the vehicle, and the road tracking of the axle has also improved. Because of the new position of the stabilizer bars, the ground clearance in front of and behind the pneumatic tandem axle suspension has been increased.

In particular the arrangement of the pivot bearings for rotatable supporting the traverse beams in a position above the air bellows and under the frame contributes to the compact design. These pivot bearings can be arranged, for example, within a bracket part for supporting the air bellows with respect to the frame.

According to a preferred embodiment of the present invention, the traverse beam of the respective stabilizer bars have a cranked shape. This shape can be chosen to provide more room for central parts of the axles, in particular a drive shaft. Such bulky axle parts can obstruct the movement of the stabilizer bar. However, by the cranked shape this problem can be solved.

More preferably, the axle brackets each comprise an extension portion extending from the top of the axle, with its end being hinged to the lower end of the respective thrust rod.

According to another preferred embodiment of the present invention, the pivot bearings supporting the traverse beams are disposed within frame brackets mounted at the bottom of the frame.

More preferably, the pivot bearings supporting the traverse beam are disposed within air bellow plate brackets mounted at the top of the respective air bellow.

According to another preferred embodiment of the present invention, the air bellow plate brackets and the lower part of the frame brackets are formed as one piece.

These and other features and advantages of the present invention will become apparent and elucidated from the following description of preferred embodiments of the invention, which will be described hereinafter.
- Fig. 1: is a side view of an embodiment of the pneumatic tandem axle suspension according to the present invention;
- Fig. 2: is a top view of the embodiment of the pneumatic tandem axle suspension shown in Fig. 1; and
- Fig. 3: is an enlarged perspective view of the portion designated by the letter B in Fig. 1, with some construction parts being omitted.

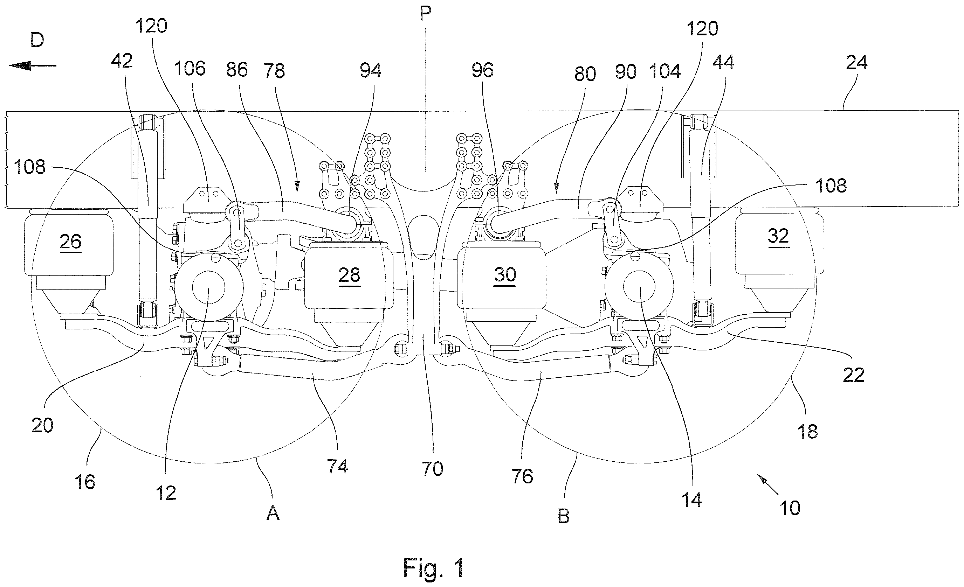

Fig. 1 shows a pneumatic tandem axle suspension 10 for a pair of rear axles 12,14 of a vehicle, which is a heavy goods vehicle in the present embodiment. However, it is noted that the present invention is also applicable to other kinds of vehicles and not restricted to heavy good vehicles. The driving direction in Fig. 1 is the left direction (indicated by an arrow D), and both axles 12,14 extend perpendicular to the plane of the drawing, i. e. perpendicular to the driving direction D. In the following, the terms "front", "rear", "left", "right", etc. refer to the indicated driving direction D.

The axles 12,14 are spaced apart from each other with respect to the driving direction D and shall be designated as front axle 12 and rear axle 14, referring to their mutual arrangement with respect to the driving direction D. Each of the axles 12,14 is suspended within its own suspension portion 16,18 of the pneumatic tandem axle suspension 10. Both suspension portions 16,18 generally have the same construction, such that the portions of the pneumatic tandem axle suspension 10 marked by the letters A and B in Fig. 1 are generally mirror symmetric with respect to a vertical center plane P perpendicular to the driving direction D.

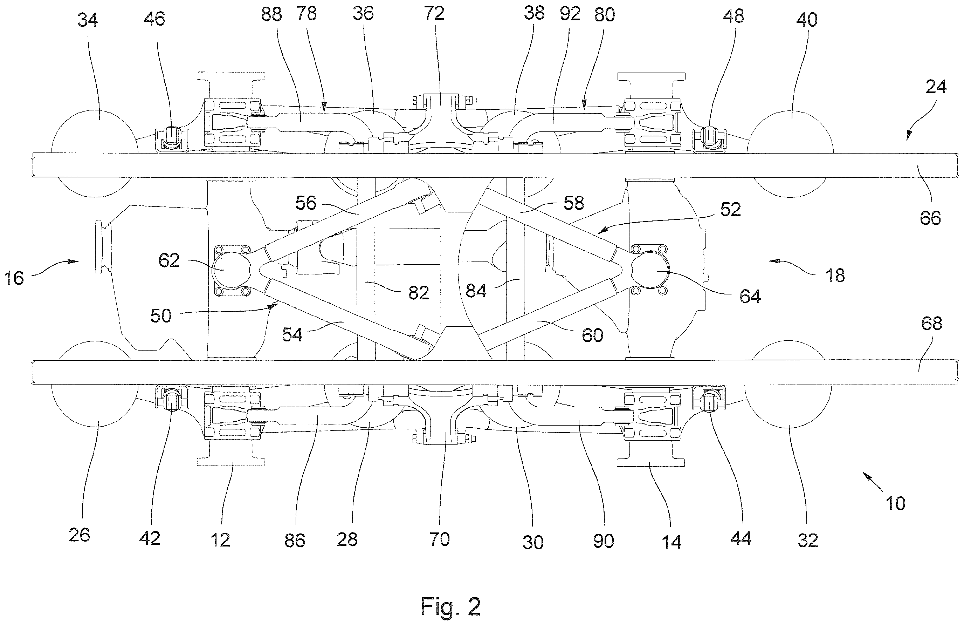

Each of the front and rear suspension portions 16,18 comprises a pair of spring beams 20,22 for supporting the respective axle 12,14, wherein each of the spring beams 20,22 of this pair is arranged beneath the vehicle frame 24 and extends in the driving direction D perpendicular to the axle 12,14. With other words, each of the front and rear suspension portions 16,18 comprises a left and a right spring beam which are arranged beneath the left and right side of the frame 24. It can also be taken from the top view in Fig. 2 that the two left spring beams of the pneumatic tandem axle suspension 10, belonging to different suspension portions 16,18, are arranged behind each other with respect to the driving direction D, and this is also the case for the respective right spring beams in the upper part of Fig. 2.

Moreover, each of the front and rear suspension portion 16,18 comprises two pairs of air bellows 26,28; 30,32, with each one pair being arranged at one side of the vehicle frame 24 and comprising a front bellow 26,30 and a rear bellow 28,32 arranged in front of and behind the axle 12,14, respectively, to support the respective front or rear end of the spring beams 20,22 against the bottom of the frame 24. In Fig. 1, only the air bellows 26,28; 30,32 on the left side of the vehicle are visible, namely (in the order from left to right in Fig. 1) the left front bellow 26 of the front suspension portion 16, the left rear bellow 28 of the front suspension portion 16, the left front air bellow 30 of the rear suspension portion 18, and the left rear air bellow 32 of the rear suspension portion 18. The corresponding right air bellows 34,36,38,40 are visible in the top view in Fig. 2.

Moreover, each of the front rear suspension portions 16,18 comprises a pair of hydraulic shock absorbers 42,44; 46,48 to support the spring beams 20,22 with respect to the frame 24. The lower ends of these shock absorbers 42,44,46,48 are mounted to portions of the respective spring beams 20,22 extending away from the respective axle 12,14 on the side of the axle 12,14 away from the respective other suspension portion, i. e. at the outer side of the pneumatic tandem axle suspension 10. The upper ends of the shock absorbers 42,44; 46,48 are attached laterally to the frame 24. The shock absorbers 42,44; 46,48 can perform a swiveling movement around their upper attachment bearings. As usual, the hydraulic shock absorbers 42,44,46,48 can be linearly extracted or retracted to change their length, i. e. the distance between the respective spring beam 20,22 and the frame 24.

As can be taken from the top view in Fig. 2, each of the front and rear suspension portions 16,18 comprises a triangular rod 50,52 which is hinged to an upper center portion of the respective axle 12,14 and the frame 24, respectively. More specifically, each triangular rod 50,52 has a shape of an isosceles triangle, the legs of which is formed by two upper rods 54,56,58,60 being connected to each other to form one piece, enclosing an acute angle. They extend from a common joint 62,64, with their ends being linked to the left and right parallel beams 66,68 of the frame 24. By this hinged arrangement, the respective triangular rod 50,52 can follow a vertical movement of the respective axle 12,14 to which it is attached, performing a swiveling movement. The two triangular rods 50,52 of the pneumatic tandem axle suspension 10 are arranged such that their respective upper rods 54,56 and 58,60 extend toward each other and being hinged to the left and right beams 66,68 of the frame 24 in a center portion of the pneumatic axle suspension 10.

In this center portion, one pair front hangers 70,72 is disposed to extend downwardly from the beams 66,68 of the frame 24. Each of the front and rear suspension portion 16,18 comprises one pair of longitudinal rods 74,76 (see Fig. 1), each longitudinal rod 74,76 extending between one of the hangers 70,72 at the respective left or right side of the vehicle and one spring beam 20,22 of the respective suspension portion 16,18 and is hinged with its ends to the front hanger 70,72 and the spring beam 20,22, respectively. With the spring beams 20,22 performing a vertical movement together with the axles 12,14, the longitudinal rods 74,76 follow this movement by performing a swiveling movement around their hinge bearings at the hangers 70,72. It can be taken from Fig. 1 that on each side of the vehicle (with the left side visible in Fig. 1), two longitudinal rods 74,76, belonging to the front and rear suspension portions 16,18, respectively, extend from the lower end of the hanger 70 in the driving direction D and opposite to the driving direction D, i. e. opposite to each other.

According to the present invention, each of the front and rear suspension portions 16,18 comprises a stabilizer bar 78,80 which is generally U-shaped and disposed above the respective axle 12,14. Each stabilizer bar 78,80 comprises a traverse beam 82,84, extending parallel to the respective axle 12,14. The legs 86,88 of the stabilizer bar 78 of the front suspension portion 16 extend in the driving direction D, while the legs 90,92 of the stabilizer bar 80 of the rear suspension portion 18 extend in the opposite direction. That is, the respective legs 86,88;90,92 of the front and rear suspension portions 16,18 extend in a direction away from the respective other suspension portion, respectively.

The traverse beam 82,84 of each stabilizer bar 78,80 is rotatable supported within a pair of pivot bearings 94,96, with each of the pivot bearings 94,96 being mounted between the bottom of the frame 24 and one of the air bellows 28,30; 36,38 of the pair of air bellows disposed at the side of the respective suspension portion 16,18 facing the other suspension portion 18,16. As can be taken from Fig. 1, the pivot bearings 94 for supporting the traverse beam 82 of the stabilizer bar 78 of the front suspension portion 16 are disposed between the rear air bellows 28,36 of the front suspension portion 16, behind the front axle 12, while the pivot bearings 96 for supporting the traverse beam 84 of the stabilizer bar 80 of the rear suspension portion 18 are mounted on the front air bellows 30,38 of the rear suspension portion 18 in front of the rear axle 14. With other words, the pivot bearing 94,96 are mounted on those four air bellows 28,30; 36,38 that are mounted underneath the frame 24 in the space delimited by the front axle 12 and rear axle 14.

By supporting the respective traverse beams 82,84 within the pivot bearings 94,96, the stabilizer bars 78,80 can perform a swiveling movement, with their legs 86,88,90,92 being pivoted up and down when the traverse beams 82,84 are rotated within their respective pivot bearings 94,96.

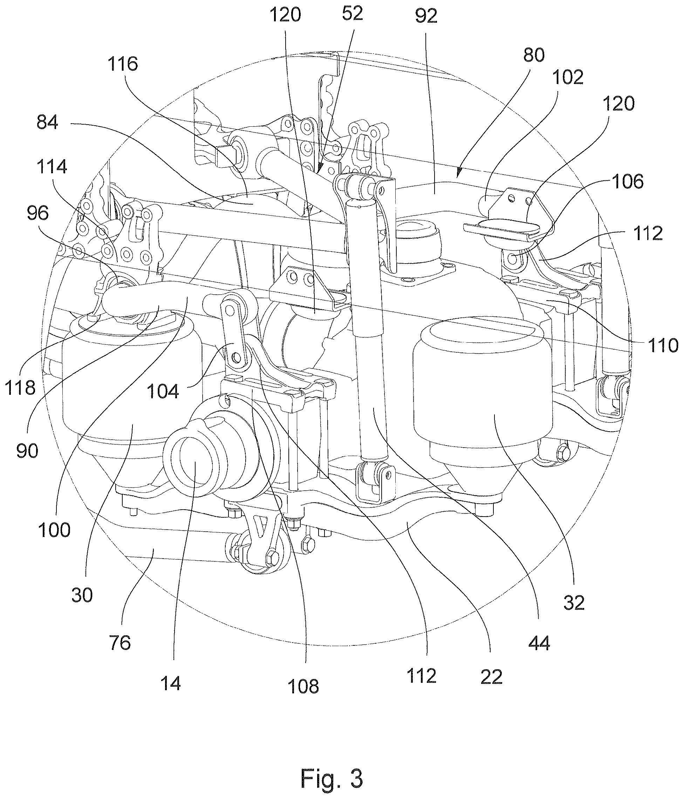

As can be taken from the enlarged perspective view in Fig. 3, showing the stabilizer bar 80 of the rear suspension portion 18 in more detail, the rear ends 100,102 of the legs 90,92 are pivotable linked to the perspective axle 14 via generally perpendicular thrust rods 104,106 and axle brackets 108,110 mounted on top of the axle 14, with each thrust rod 104,106 being hinged to one leg end 100,102 and to one axle bracket 108,110, respectively. To this purpose, each of the axle brackets 108,110 comprises an extension portion 112 extending from the top of the axle 14 at the side of the respective bracket 108,110 facing the traverse beam 84. In the arrangement, the thrust rod 104,106 can perform a pivot movement with respect to the axle bracket 108,110, on one hand, and to the respective leg 90,92 of the stabilizer bar 80, on the other hand. The upper and lower ends of the thrust rods 104,106 are connected to the legs 90,92 and the axle brackets 108,110 by hinge bearings.

The pivot bearings 94,96 supporting the traverse beams 82,84 are disposed between the lower portions of frame brackets 114 mounted at the bottom of the frame 24, namely at the bottom of the respective bars 66,68 delimiting the frame 24 laterally, and the upper portions of air bellow plate brackets 118 mounted on top of the respective air bellows 30,38. For supporting the pivot bearings 94,96 from top and from below, the frame brackets 114 and the air bellow plate brackets 118 are provided with semi-shells to surround the respective pivot bearings 94,96 in the mounted state. The frame brackets 114 are fixed to the bottom of the respective bar 66,68, while the air bellow plate brackets 118 are fixed to the upper surfaces of the respective air bellows 30,38 or being formed as one piece with this upper surface. The frame brackets 114 and the air bellow plate brackets 118 can also be formed as one piece.

In Fig. 3, two pivot bearings 94,96 are disposed on top of the air bellows 30,38 for supporting the stabilizer bar 80 of the rear suspension portion 18. However, the construction shown in Fig. 3 for supporting the stabilizer bar 80 is mirror symmetric to the suspension of the stabilizer bar 78 of the front suspension portion 16, and the arrangement of the respective pivot bearings for supporting the front stabilizer bar 78 is the same as shown in Fig. 3 in a mirror symmetric arrangement with respect to the plane P.

The traverse beam 84 of the stabilizer bar 80 shown in Fig. 3 has a cranked shape, with a central section 116 having a bent shape bending towards the top of the vehicle. At the concave side of this section 116, there is space for accommodating other construction parts of the vehicle. By the cranked shape of the traverse beam 80, a collision of the respective stabilizer bar 80 with other bulky construction parts of the vehicle is avoided.

The front and rear suspension portions 16,18 operate independent from each other. When a pushing force acts on the respective axle 12,14 in the upward direction, for example, by a road bump or the like, the load is taken by the air bellows 26,28,30,32,34,36,38,40 and the hydraulic shock absorbers 42,44,46,48 so that they are compressed. At the same time, the axle brackets 108,110 on top of the respective axles 12,14 transmit the force onto the thrust rods 104,106 to which they are linked and the thrust rods 104,106 in turn pivot to legs 86,88,90,92 of the stabilizer bar 78,80 to which they are linked in an upward direction, with the respective traverse beam 82,84 being turned within its pivot bearings 94,96. The longitudinal rods 74,76 connected to the hangers 70,72 have a guiding function in this movement, together with the triangular rods 50,52 of the respective front and rear suspension portions 16,18. Stopper brackets 120 mounted at the bottom of the frame 24 act as stopping elements to absorb shocks from impacts of the axle 12,14 abutting the frame 24.

The arrangement of the stabilizer bars 78,80 is very compact and consumes little space above the axles 12,14. In particular, the mountings of the air bellows 28,30;36,38 arranged in the space delimited by the axles 12,14 are used for accommodating the pivot bearings 94,96 supporting the traverse beams 82,84 of the stabilizer bars 78,80. The ground clearance in front of and behind the pneumatic tandem axle suspension 10 is increased. In the present construction, the stabilizer bars 78,80 are lighter, decreasing the overall weight of the vehicle and the manufacturing costs.

## Claims

1. Pneumatic tandem axle suspension (10) for a pair of rear axles (12,14) of a vehicle, in particular a heavy goods vehicle, said pair of rear axles comprising a front axle (12) and a rear axle (14) arranged behind each other with respect to the driving direction (D) of the vehicle,
wherein the pneumatic tandem axle suspension (10) comprises a front suspension portion (16) and a rear suspension portion (18) for suspending the front axle (12) and the rear axle (14), respectively,
each of the front and rear suspension portions (16,18) comprising:
- a pair of spring beams (20,22) for supporting the axle (12,14), each of the spring beams (20,22) being arranged beneath a vehicle frame (24) and extending perpendicular to the axle (12,14),
- two pairs of air bellows (26,28; 30,32), with each one pair being arranged at one side of the vehicle frame (24) and comprising a front bellow (26,30) and a rear bellow (28,32) arranged in front of and behind the axle (12), respectively, to support the respective front or rear end of the spring beams (14) at this side of the vehicle against the bottom of the frame (24),
- a pair of hydraulic shock absorbers (42,44; 46,48), each shock absorber being arranged to support one of the spring beams (20,22) with respect to the frame (24),
- and a triangular rod (50,52) being pivotable linked to an upper center portion of the axle (12,14) and the frame (24), respectively,
wherein the pneumatic tandem axle suspension (10) further comprises a pair of front hangers (70,72), each front hanger (70,72) extending downward from the frame at a position between the front axle (12) and the rear axle (14),
and each of the front and rear suspension portions (16,18) comprises a pair of longitudinal rods (74,76), each longitudinal rod (74,76) extending between one of the front hangers (70,72) at the respective side of the vehicle and one spring beam (20,22) of the respective suspension portion (16,18) and being hinged with its ends to the hanger (70,72) and the spring beam (20,22), respectively,
**characterized in that** each of the front and rear suspension portions (16,18) comprises a stabilizer bar (78,80) which is generally U-shaped and disposed above the axle (12,14), with a traverse beam (82,84) and two legs (86,88; 90,92) extending from the ends of the traverse beam (82,84) in a direction perpendicular to the axle (12,14), wherein the traverse beam (82,84) is rotatable supported within a pair of pivot bearings (94,96), with each of the pivot bearings (94,96) being mounted between the bottom of the frame (24) and one of the air bellows (26,28; 30,32) such that the legs (86,88; 90,92) can perform a swiveling movement, and the ends (100,102) of the legs (86,88; 90,92) being pivotable linked to the axle (12,14) suspended by the respective suspension portion via generally perpendicular thrust rods (104,106) and axle brackets (108,110) mounted on top of the axle (12), with each thrust rod (104,106) being pivotable hinged to one leg end (100,102) and to one axle bracket (108,110), respectively.

2. Pneumatic axle suspension according to claim 1, **characterized in that** the traverse beams (82,84) of the stabilizer bars (78,80) have a cranked shape.

3. Pneumatic axle suspension according to one of the preceding claims, **characterized in that** the axle brackets (108,110) each comprise an extension portion (112) extending from the top of the axle (12,14), with its end being hinged to the lower end of the respective thrust rod (104,106).

4. Pneumatic axle suspension according to one of the preceding claims, **characterized in that** the pivot bearings (94,96) supporting the traverse beams (82,84) are disposed within frame brackets (114) mounted at the bottom of the frame (24).

5. Pneumatic axle suspension according to one of the preceding claims, **characterized in that** the pivot bearings (94,96) supporting the traverse beam (82,84) are disposed within air bellow plate brackets (118) mounted at the top of the respective air bellow (28,36;30,38).

6. Pneumatic axle suspension according to claim 5 in connection with claim 4, **characterized in that** the air bellow plate brackets (118) and the lower part of the frame brackets (114) are formed as one piece.

## Patentansprüche

1. Pneumatische Tandemachsaufhängung (10) für ein Paar von Hinterachsen (12,14) eines Fahrzeugs, insbesondere eines Schwerlastfahrzeugs, wobei das Paar Hinterachsen eine Vorderachse (12) und eine Hinterachse (14) umfasst, welche in Bezug auf die Fahrtrichtung (D) des Fahrzeugs hintereinander angeordnet sind,
wobei die pneumatische Tandemachsaufhängung (10) einen vorderen Aufhängungsabschnitt (16) und einen hinteren Aufhängungsabschnitt (18) zur jeweiligen Aufhängung der Frontachse (12) und Hinterachse (14) umfasst,
wobei jeder der Vorder- und Hinterabschnitte (16,18) umfasst:
- ein Paar von Federbalken (20,22) zum Stützen der Achse (12,14), wobei jeder der Federbalken (20,22) unter einem Fahrzeugrahmen (24) angeordnet ist und sich senkrecht zur Achse (12,14) erstreckt,
- zwei Paare Luftbälge (26,28; 30,32), wobei jeweils ein Paar einer Seite des Fahrzeugrahmens (24) angeordnet ist und einen vorderen Luftbalg (26,30) und einen hinteren Luftbalg (28,32) umfasst, welche jeweils vor und hinter der Achse angeordnet sind, um das jeweilige Vorder- oder Hinterende der Federbalken (14) dieser Fahrzeugseite gegen die Unterseite des Rahmens (24) zu stützen,
- ein Paar hydraulischer Stoßdämpfer (42,44; 46,48), wobei jeder Stoßdämpfer angeordnet ist, um einen der Federbalken (20,22) in Bezug auf den Rahmen (24) zu stützen,
- und einen dreikantigen Stab (50,52) welcher jeweils schwenkbar mit einem oberen Mittelteil der Achse (12,14) und dem Rahmen (24) verbunden ist,
wobei die pneumatische Tandemachsaufhängung (10) weiterhin ein Paar vorderer Aufhängungen (70,72) umfasst, wobei jede vordere Aufhängung (70,72) sich an einer Position zwischen der Vorderachse (12) und der Hinterachse (14) vom Rahmen aus nach unten erstreckt,
und jeder der Vorder- und Hinterabschnitte der Aufhängung (16,18) ein Paar von Längsstäben (74,76) umfasst, von denen sich jeder Längsstab (74,76) zwischen einer der vorderen Aufhängungen (70,72) der jeweiligen Seite des Fahrzeugs und einem Federbalken (20,22) des jeweiligen Aufhängungsabschnitts erstreckt und mit seinen Enden jeweils an die Aufhängung (70,72) und den Federbalken (20,22) angelenkt ist,
**dadurch gekennzeichnet, dass** jeder der Vorder- und Hinterabschnitte der Aufhängung (16,18) einen Stabilisator (78,80) umfasst, welcher allgemein U-förmig ist und über der Achse (12,14) angeordnet ist, mit einer Traverse (82,84) und zwei Schenkeln (86,88; 90,92), welche sich von den Enden der Traverse (82,84) in eine Richtung senkrecht zu der Achse (12,14) erstrecken, wobei die Traverse (82,84) in zwei Drehlagern (94,96) drehbar gelagert ist, wobei jedes der Drehlager (94,96) zwischen der Unterseite des Rahmens (24) und einem der Luftbälge (26,28; 30,32) angeordnet ist, sodass die Schenkel (86,88; 90,92) eine Schwenkbewegung ausführen können, und die Enden (100,102) der Schenkel (86,88; 90,92), die drehbar mit der Achse (12,14) verbunden und an dem jeweiligen Abschnitt der Aufhängung aufgehängt sind, durch im Wesentlichen senkrechte Schubstangen (104,106) und Achsträger (108,110) mit der Achse (12) verbunden sind, wobei jede Schubstange (104,106) drehbar an jeweils ein Beinende (100,102) und einen Achsträger (108,110) angelenkt ist.

2. Pneumatische Achsaufhängung nach Anspruch 1, **dadurch gekennzeichnet, dass** die Traversen (82,84) der Querstabilisatoren (78,80) eine gekröpfte Form haben.

3. Pneumatische Achsaufhängung nach einem der vorstehenden Ansprüche, **dadurch gekennzeichnet, dass** die Achsträger (108,110) jeweils einen Verlängerungsabschnitt (112) umfassen, der sich von der Oberseite der Achse (12,14) erstreckt und mit seinem Ende an das untere Ende der jeweiligen Schubstange (104,106) angelenkt ist.

4. Pneumatische Achsaufhängung nach einem der vorstehenden Ansprüche, **dadurch gekennzeichnet, dass** die Drehlager (94,96), welche die Traversen (82,84) lagern, innerhalb Rahmenhaltern (114) angeordnet sind, welche an der Unterseite des Rahmens (24) befestigt sind.

5. Pneumatische Achsaufhängung nach einem der vorstehenden Ansprüche, **dadurch gekennzeichnet, dass** die Drehlager (94,96), welche die Traversen (82,84) lagern, innerhalb der Luftbalgplattenhalter (118) angeordnet sind, welche an der Oberseite des jeweiligen Luftbalgs (28,36; 30,38) befestigt sind.

6. Pneumatische Achsaufhängung nach Anspruch 5 in Verbindung mit Anspruch 4, **dadurch gekennzeichnet, dass** die Luftbalgplattenhalter (118) und der untere Teil der Rahmenhalter (114) einteilig ausgebildet sind.

## Revendications

1. Suspension d'essieu à tandem pneumatique (10) pour une paire d'essieux arrière (12, 14) d'un véhicule, en particulier un véhicule utilitaire lourd, ladite paire d'essieux arrière comprenant un essieu avant (12) et un essieu arrière (14) agencés l'un derrière l'autre par rapport à la direction d'entraînement (D) du véhicule,
dans laquelle la suspension d'essieu à tandem pneumatique (10) comprend une portion de suspension avant (16) et une portion de suspension arrière (18) pour la suspension de l'essieu avant (12) et de l'essieu arrière (14) respectivement,
chacune des portions de suspension avant et arrière (16, 18) comprenant :
- une paire de poutres flexibles (20, 22) pour le support de l'essieu (12, 14) chacune des poutres flexibles (20, 22) étant agencée sous un cadre de véhicule (24) et s'étendant perpendiculairement à l'essieu (12, 14),
- deux paires de soufflets à air (26, 28 ; 30, 32) chaque paire étant agencée au niveau d'un côté du cadre de véhicule (24) et comprenant un soufflet avant (26, 30) et un soufflet arrière (28, 32) agencés en face de et derrière l'essieu (12) respectivement, pour supporter l'extrémité avant ou arrière respective des poutres flexibles (14) au niveau de ce côté du véhicule contre le dessous du cadre (24),
- une paire d'absorbeurs de chocs hydrauliques (42, 44 ; 46, 48), chaque absorbeur de chocs étant agencé pour supporter une des poutres flexibles (20, 22) par rapport au cadre (24),
- et une tige triangulaire (50, 52) étant reliée de manière pivotante à une portion centrale supérieure de l'essieu (12, 14) et au cadre (24) respectivement, dans lequel la suspension d'essieu à tandem pneumatique (10) comprend en outre une paire d'éléments d'accrochage avant (70, 72), chaque élément d'accrochage avant (70, 72) s'étendant vers le bas depuis le cadre dans une position entre l'essieu avant (12) et l'essieu arrière (14),
et chacune des portions de suspension avant et arrière (16, 18) comprend une paire de tiges longitudinales (74, 76), chaque tige longitudinale (74, 76) s'étendant entre un des éléments d'accrochage avant (70, 72) au niveau du côté respectif du véhicule et une poutre flexible (20, 22) de la portion de suspension respective (16, 18) et étant articulée par ses extrémités à l'élément d'accrochage (70, 72) et à la poutre flexible (20, 22) respectivement,
**caractérisée en ce que** chacune des portions de suspension avant et arrière (16, 18) comprend une barre de stabilisateur (78, 80) qui est généralement en forme de U et disposée au-dessus de l'essieu (12, 14), avec une poutre transversale (82, 84) et deux branches (86, 88 ; 90, 92) s'étendant depuis les extrémités de la poutre transversale (82, 84) dans une direction perpendiculaire à l'essieu (12, 14), dans laquelle la poutre transversale (82, 84) est supportée de manière à pouvoir tourner dans une paire de paliers pivotants (94, 96), chacun des paliers pivotants (94, 96) étant monté entre le dessous du cadre (24) et un des soufflets à air (26, 28 ; 30, 32) de sorte que les branches (86, 88 ; 90, 92) puissent réaliser un mouvement oscillant, et les extrémités (100, 102) des branches (86, 88 ; 90, 92) étant reliées de manière pivotante à l'essieu (12, 14) suspendu par la portion de suspension respective via des tiges de poussée généralement perpendiculaires (104, 106) et des supports d'essieu (108, 110) montés sur le dessus de l'essieu (12), chaque tige de poussée (104, 106) étant articulée de manière pivotante à une extrémité de branche (100, 102) et un support d'essieu (108, 110) respectivement.

2. Suspension d'essieu pneumatique selon la revendication 1, **caractérisée en ce que** les poutres transversales (82, 84) des barres de stabilisateur (78, 80) présentent une forme coudée.

3. Suspension d'essieu pneumatique selon l'une des revendications précédentes, **caractérisée en ce que** les supports d'essieu (108, 110) comprennent chacun une portion d'extension (112) s'étendant depuis le dessus de l'essieu (12, 14), son extrémité étant articulée à l'extrémité inférieure de la tige de poussée respective (104, 106).

4. Suspension d'essieu pneumatique selon l'une des revendications précédentes, **caractérisée en ce que** les paliers pivotants (94, 96) supportant les poutres transversales (82, 84) sont disposés dans des supports de cadre (114) montés au niveau du dessous du cadre (24).

5. Suspension d'essieu pneumatique selon l'une des revendications précédentes, **caractérisée en ce que** les paliers pivotants (94, 96) supportant la poutre transversale (82, 84) sont disposés dans des supports de plaque de soufflet d'air (118) montés au niveau du dessus du soufflet à air respectif (26, 36 ; 30, 38).

6. Suspension d'essieu pneumatique selon la revendication 5 en connexion avec la revendication 4, **caractérisée en ce que** les supports de plaque de soufflet à air (118) et la partie inférieure des supports de cadre (114) sont formés en une pièce.
